# EUROPEAN PATENT APPLICATION

(11) **EP 2 919 144 A1**
(43) Date of publication of application: **16.09.2015**
(21) Application number: 13853478.9
(22) Date of filing: 26.08.2013
(51) Int. Cl.: G06F 21/41, G06F 21/31

(54) **INFORMATION PROCESSING SYSTEM AND INFORMATION PROCESSING METHOD**

(30) Priority: 09.11.2012 JP 2012247786
(71) Applicant: KPI Solutions Co., Ltd., Chuo-ku, Tokyo 104-0061 (JP)
(72) Inventor: ISHIDA, Tetsuro, Tokyo 108-0023 (JP); HEUNGMANY, Bounnong, Tokyo 104-0061 (JP)
(74) Representative: Cabinet Plasseraud
(86) International application number: PCT/JP2013/072689
(87) International publication number: WO 2014/073256

(57) **Abstract**

Disclosed are an information processing system and an information processing method which enable coordination of information pertaining to a user while taking security into consideration. The information processing system includes a cookie issuance unit 310 which transmits a cookie 423 to a client 400 when the client 400 accesses a member site, a coordination information management unit 320 which receives a user ID for logging in to the member site from the client 400, a database 340 which manages the user ID in coordination with an identifier assigned to the cookie 423, and an ID notification unit 330 which transmits the user ID corresponding to the identifier assigned to the cookie 423 set in the client 400 in response to a request from the client 400.

## Description

### Technical Field

Some aspects of the invention relate to an information processing system and an information processing method.

### Background Art

In recent years, various services are provided on the Internet, and various kinds of data are managed according to each service. For example,
Patent Document 1 discloses that a user ID and a password are input when showing a blog, when the user ID and the password are matched, information of the user ID and a user blog URL coordinated with the user ID is sent to a coordination server, and the coordination server sends various kinds of data attached to contents to a blog server.

### Citation List

### Patent Document

Patent Document 1: Domestic Re-publication of PCT International Application No. 2009/139035

### Summary of the Invention

### Problem to be Solved by the Invention

On the other hand, there is also a need for coordinating information corresponding to member's personal information managed on a member site, not disclosed information, such as content information described in Patent Document 1. For example, when the same data as data input on a site of a company A is required on a site of a company B, if information can be coordinated between the sites, a user can save labor for input.

However, in many cases, the exchange of personal information between different providers is not admitted in terms of personal information protection.

Some aspects of the invention have been accomplished in consideration of the above-described problems, and one object of some aspects of the invention is to provide an information processing system and an information processing method which enable coordination of information pertaining to a user while taking security into consideration.

### Means for Solving the Problem

An information processing system according to an aspect of the invention includes cookie transmission means for transmitting a cookie to a client terminal when the client terminal accesses a member site, reception means for receiving a user ID for logging in to the member site from the client terminal, information management means for managing the user ID in coordination with an identifier assigned to the cookie, and transmission means for transmitting the user ID corresponding to the identifier assigned to the cookie set in the client terminal in response to a request from the client terminal.

An information processing system according to another aspect of the invention includes first transmission means for transmitting webpage information including, as a part, a program for providing a member site to a client terminal and causing the client terminal to acquire a cookie from another information processing apparatus and to transmit a user ID to another information processing apparatus, and second transmission means for transmitting member information pertaining to a member of the member site in response to a request designated with a user ID.

An information processing system which provides a website according to a further aspect of the invention includes transmission means for transmitting a program which causes a client terminal, to receive, from a first information processing apparatus, a user ID corresponding to an identifier of a cookie received from the first information processing apparatus, and to acquire member information pertaining to a member site from a second information processing apparatus based on the user ID.

An information processing method according to still another aspect of the invention causes an information processing system to perform a step of transmitting a cookie to a client terminal when the client terminal accesses a member site, a step of receiving a user ID for logging in to the member site from the client terminal, a step of managing the user ID in coordination with an identifier assigned to the cookie, and a step of transmitting the user ID corresponding to the identifier assigned to the cookie set in the client terminal in response to a request from the client terminal.

An information processing method according to still another aspect of the invention causes an information processing system to perform a step of transmitting webpage information including, as a part, a program for providing a member site to a client terminal and causing the client terminal to acquire a cookie from another information processing apparatus and to transmit a user ID to another information processing apparatus, and a step of transmitting member information pertaining to a member of the member site in response to a request designated with a user ID.

An information processing method for an information processing system which provides a website according to still another aspect of the invention includes a step of transmitting a program which causes a client terminal to receive, from a first information processing apparatus, a user ID corresponding to an identifier of a cookie received from the first information processing apparatus, and to acquire member information pertaining to a member site from a second information processing apparatus based on the user ID.

In the invention, the terminology "unit", "means", "device", or "system" does not necessarily mean physical means, but includes the case where the function of each "unit", "means", "device", or "system" is implemented by software. The function of one "unit", "means", "device", or "system" may be implemented by two or more physical means or devices, or the functions of two or more "units", "means", "devices", or "systems" may be implemented by one physical means or device.

### Effect of the Invention

According to the invention, it is possible to provide an information processing system and an information processing method which enable coordination of information pertaining to a user while taking security into consideration.

### Brief Description of the Drawings

Fig. 1 is a diagram illustrating the overview of a data coordination system according to an embodiment of the invention.
Fig. 2 is a functional block diagram illustrating an example of the functional configuration of the data coordination system illustrated in Fig. 1.
Fig. 3 is a flowchart illustrating an example of the flow of processing of a client illustrated in Fig. 1.
Fig. 4 is a flowchart illustrating an example of the flow of processing of a member site providing server illustrated in Fig. 1.
Fig. 5 is a flowchart illustrating an example of the flow of processing of a cookie matching server illustrated in Fig. 1.
Fig. 6 is a flowchart illustrating an example of the flow of processing of the client illustrated in Fig. 1.
Fig. 7 is a flowchart illustrating an example of the flow of processing of the cookie matching server illustrated in Fig. 1.
Fig. 8 is a flowchart illustrating an example of the flow of processing of the client illustrated in Fig. 1.
Fig. 9 is a flowchart illustrating an example of the flow of processing of the cookie matching server illustrated in Fig. 1.
Fig. 10 is a flowchart illustrating an example of the flow of processing of the member site providing server illustrated in Fig. 1.
Fig. 11 is a block diagram illustrating the configuration of hardware capable of mounting the member site providing server, the cookie matching server, or the web service providing server illustrated in Fig. 1.

### Mode for Carrying out the Invention

Hereinafter, an embodiment of the invention will be described. In the following description and the drawings to be referred to, the same or similar parts are represented by the same or similar reference numerals.

### (Embodiment)

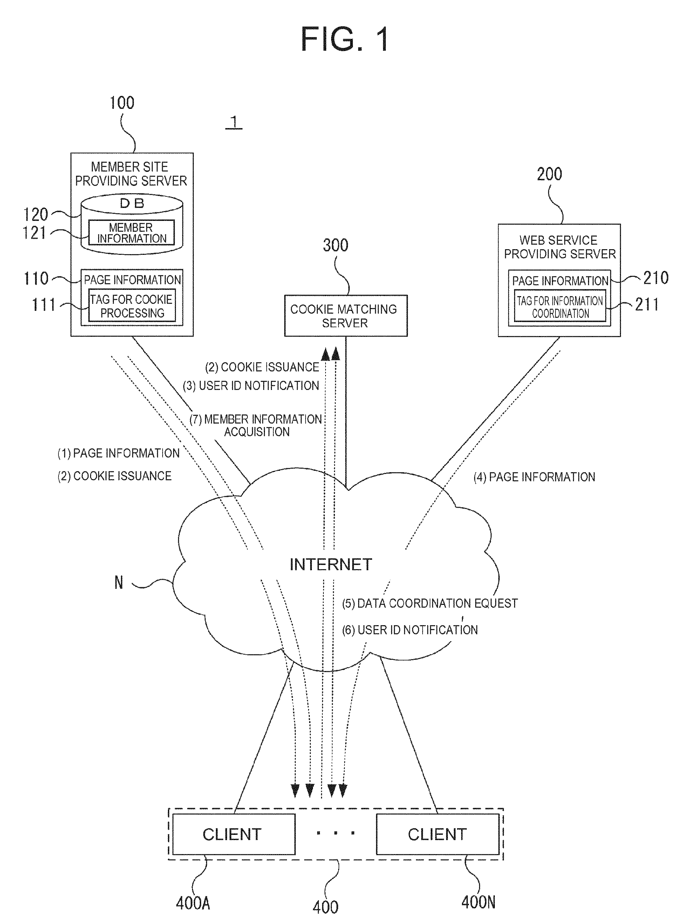

Figs. 1 to 11 are diagrams illustrating an embodiment. Hereinafter, the embodiment will be described along the flow described below referring to the drawings. First, the overview of a system according to the embodiment will be described in "1". Next, the functional configuration of the system will be described in "2", and the flow of processing pertaining to each device at the time of a login to a member site and at the time of a login to a web service providing site will be described in "3". A specific example of a hardware configuration capable of mounting each server constituting the system will be described in "4". Finally, the effects of this embodiment and the like will be described in "5".

### (1 Overview)

### (1.1 Overview of System)

Fig. 1 is a diagram illustrating the schematic configuration of a data coordination system 1 including an information processing system of this embodiment. As illustrated in Fig. 1, the data coordination system 1 of this embodiment includes a member site providing server 100, a web service providing server 200, a cookie matching server 300, and a client 400 (clients 400A to 400N are collectively referred to as a client 400 or a client terminal 400). The member site providing server 100, the web service providing server 200, the cookie matching server 300, and the client 400 are communicable with one another through the Internet N.

The overview of the system will be simply described. The client 400 can access a member site (refers to a membership site or refers to a site which requires a login with a user ID, a password, and the like so as to browse at least a part of webpages in the site) provided by the member site providing server 100, a web service providing site provided by the web service providing server 200, or the like.

The member site providing server 100 manages member information 121 pertaining to a member of a member site on a database (DB) 120. As a specific example of information included in the member information 121, for example, various kinds of information, such as name, address, telephone number, sex, date of birth, product purchase history, and service use history, are considered.

An agreement is reached to admit the coordination of the member information 121 between the providers which respectively manage the member site providing server 100 and the web service providing server 200. With this, in the data coordination system 1 of this embodiment, if the user admits the coordination of the member information 121 in advance, the member information 121 can be acquired from the member site providing server 100 through the cookie matching server 300 and can be reflected on a page of the web service providing server 200 of this embodiment.

Page information 110 constituting the member site provided by the member site providing server 100 is embedded with a tag for cookie processing 111 which is a program described in, for example, JavaScript (Registered Trademark) or the like. The client 400 acquires a cookie from the member site providing server 100 or the cookie matching server 300 according to the description of the tag for cookie processing 111 when accessing the member site provided by the member site providing server 100.

The tag for cookie processing 111 functions to acquire a user ID of the user for logging in to the member site of the member site providing server 100, and the user ID is transmitted to the cookie matching server 300. The cookie matching server 300 manages the coordination relationship between the user ID notified from the client 400 and an identifier assigned to a cookie (cookie for matching server) issued by the cookie matching server 300.

Page information 210 constituting the website provided by the web service providing server 200 is embedded with a tag for information coordination 211 which is a program described in, for example, JavaScript (Registered Trademark) or the like. The client 400 requests the cookie matching server 300 for data coordination according to the description of the tag for information coordination 211 when accessing the website provided by the web service providing server 200. At this time, since information regarding the identifier of the cookie for matching server is transmitted to the cookie matching server 300, the client 400 can acquire information regarding the user ID corresponding to the identifier. The client 400 acquires the member information 121 from the member site providing server 100 with the user ID as a key, whereby the member information 121 can be reflected on the screen based on the page information 210.

That is, in the data coordination system 1, instead of sending the user ID and the password in sets, the member information 121 which is managed by the member site providing server 100 can be coordinated on the page of the web service providing server 200. At this time, the user ID is not notified to the web service providing server 200. That is, a risk of leakage of the member information 121 as member's personal information to the third party can be suppressed, and the user can use data coordination between the web service providing server 200 and the member site providing server 100.

As a specific example of such a service, for example, when the operator of the member site providing server 100 is a non-life insurance company and the operator of the web service providing server 200 is an automobile sales company of used cars, it is considered that information, such as the model year or model number of a currently riding car, included in the member information 121 of the non-life insurance company is simply reflected on the webpage of the automobile sales company. With this, the user can save labor to examine the model year or model number of the car.

As another specific example, for example, when the operator of the member site providing server 100 is a credit card operation company or an electronic money operation company, and the provider of the web service providing server 200 is an operator of an electronic commercial transaction site, it is considered that information, such as the amount of point reward at the time of payment, is simply reflected on the webpage of the electronic commercial transaction site. With this, the user can know information, such as the amount of point reward, on the electronic commercial transaction site without logging in to the website of the credit card operation company or the electronic money operation company.

### (1.2 Overview of Processing of System)

As described above, the member site providing server 100 is a server which provides a website, to which the member login is possible. If an access from the client 400 is received, the member site providing server 100 can transmit the page information 110 designated by an accessed URL (Uniform Resource Locator) to the client 400 (in the drawing, (1)). The page information 110 is, for example, text data or the like described in HTML (HyperText Markup Language) or the like. While a user of a non-member can access a part of a site which is provided by the member site providing server 100, for example, in order to browse member-exclusive contents or to receive a point service or the like, the user should become a member and log in to the site.

In order for a member to log in to the member site of the member site providing server 100, the user registers various kinds of attribute information, such as name, sex, address, and date of birth, in advance and receives the issue of a user ID and a password. The user logs in using the user ID and the password. The member information 121 can include the attribute information input by the user or information regarding the use situations of various services provided by the member site. As described above, the member information 121 is used for the coordination of data to be sent to the web service providing server 200 as a result of predetermined processing. Accordingly, when using the member information 121 of the user for data coordination, it is preferable to obtain the prior consent (opt-in) of the user. That is, it is desirable to use only the member information 121 with the prior consent of the user for data coordination.

The page information 110 which is provided by the member site providing server 100 is embedded with the tag for cookie processing 111 for setting a cookie from the member site providing server 100 or the cookie matching server 300 in a browser of the client 400. When the page information 110 is received from the member site providing server 100, the client 400 acquires cookies from the member site providing server 100 and the cookie matching server 300 according to the tag for cookie processing 111 embedded in the page information 110 (in the drawing, (2)). These cookies are assigned with an identifier for identifying each client 400. When a cookie is already set in the browser, the processing is not required.

The cookie transmitted from the member site providing server 100 is in a temporary state until a first login is successful after the cookie transmission. Thereafter, if the user succeeds in logging in, the cookie is placed in a member state in which the cookie is usable for the coordination of the member information 121. At the time of the login, the user ID is notified from the client 400 to the cookie matching server 300 based on the function of the tag for cookie processing 111 (in the drawing, (3)). With this, since the coordination relationship between the user ID and the identifier assigned to the cookie set in the client 400 by the cookie matching server 300 is understood, the cookie matching server 300 manages this information.

Thereafter, if an access from the client 400 is received, the web service providing server 200 transmits the page information 210 designated by an accessed URL to the client 400 (in the drawing, (4)). Similarly to the page information 110, the page information 210 is text data or the like described in HTML or the like. The page information 210 is embedded with the tag for information coordination 211. If the page information 210 is received from the web service providing server 200, the client 400 requests the cookie matching server 300 for cookie coordination according to the tag for information coordination 211 (in the drawing, (5)). If the request for cookie coordination is received, the cookie matching server 300 examines the user ID of the user, who operates the client 400, based on the identifier assigned to the cookie issued by the cookie matching server 300 and gives a notification of the user ID to the client 400 (in the drawing, (6). The client 400 can acquire the member information 121 from the member site providing server 100 using the user ID under the control by the tag for information coordination 211 (in the drawing, (7)). As a result of such processing, the member information 121 can be reflected in the page information 210.

### (2 Functional Configuration of System)

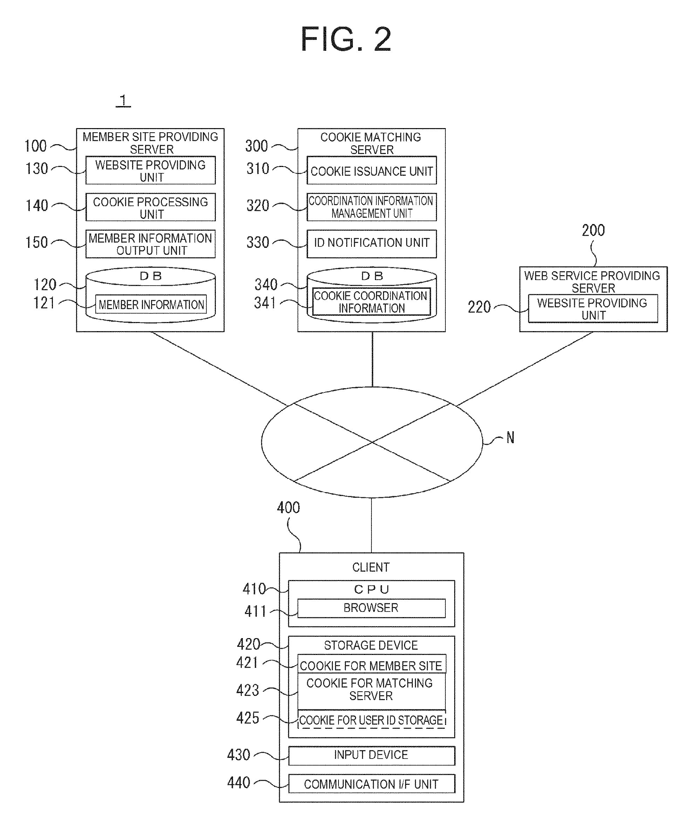

Subsequently, the functional configuration of each device which constitutes the data coordination system 1 will be described referring to Fig. 2. Fig. 2 is a functional block diagram illustrating the function of each device (information processing system) which constitutes the data coordination system 1.

### (2.1 Member Site Providing Server 100)

First, the member site providing server 100 will be described. As described above, the member site providing server 100 functions to operate the member site and to transmit the member information 121 pertaining to the designated user ID in response to a request from the tag for information coordination 211.

The member site providing server 100 broadly includes a website providing unit 130, a cookie processing unit 140, a member information output unit 150, and a database 120.

The website providing unit 130 provides a member site service to the client 400. Specifically, the website providing unit 130 transmits the page information 110 including the tag for cookie processing 111 in response to a request from the client 400. Login processing or the like is performed by the website providing unit 130.

The cookie processing unit 140 transmits a cookie 421 in response to a request from the client 400. As described above, the cookie 421 has a temporary state and a member state, and if the user succeeds in logging in to the member site provided by the member site providing server 100 once, the cookie 421 is placed in the member state by the tag for cookie processing 111.

The member information output unit 150 transmits the member information 121 according to the user ID in response to a member information acquisition request designated with the user ID from the client 400. The member information 121 is transmitted when the cookie 421 set in the client 400 by the cookie processing unit 140 is in the member state.

### (2.2 Web Service Providing Server 200)

Next, the web service providing server 200 will be described. As described above, the web service providing server 200 provides a website which provides a web service to the client 400. The web service providing server 200 includes a website providing unit 220. The website providing unit 220 provides a website service to the client 400. Specifically, the website providing unit 220 transmits the page information 210 including the tag for information coordination 211 in response to a request from the client 400. The tag for information coordination 211 is used to acquire, based on an identifier of a cookie 423, the user ID corresponding to the identifier from the cookie matching server 300 and to acquire the member information 121 from the member site providing server 100 based on the user ID.

That is, the tag for information coordination 211 is included, whereby information (for example, points on the member site, various other kinds of registration information, and the like) pertaining to the member information 121 can be displayed on the display screen of the browser 411 based on the page information 210.

### (2.3 Cookie Matching Server 300)

Next, the cookie matching server 300 will be described. As described above, the cookie matching server 300 functions to issue the cookie 423 to the client 400, to manage the coordination relationship between the identifier assigned to the cookie 423 and the user ID, and to give a notification of the user ID corresponding to the cookie 423 to the client 400 in response to a request from the client 400.

The cookie matching server 300 includes a cookie issuance unit 310, a coordination information management unit 320, an ID notification unit 330, and a database 340.

The cookie issuance unit 310 issues the cookie 423 in response to a request from the client 400. The cookie 423 is allocated with the identifier. Therefore, when an access from the client 400 with the cookie 423 set therein is received, the cookie matching server 300 can give a notification of information regarding the identifier allocated to the cookie 423.

The coordination information management unit 320 manages cookie coordination information 341 on the DB 340. The cookie coordination information 341 is information in which the identifier assigned to the cookie 423 is coordinated with the user ID. The user ID is notified based on the function of the tag for cookie processing 111 by the client 400 which logs in to the member site providing server 100. If the notification of the user ID is received, the coordination information management unit 320 stores the cookie coordination information 341 in the DB 340 together with the identifier of the cookie 423 set in the client 400.

The ID notification unit 330 gives a notification of the user ID corresponding to the identifier assigned to the cookie 423 to the client 400 in response to a data coordination request from the browser 411 with the cookie 423.

### (2.4 Client 400)

Subsequently, the client 400 will be described. The client 400 is an information processing apparatus which can access the member site provided by the member site providing server 100 or the web service providing site provided by the web service providing server 200. As a specific example of the client 400, for example, a PC (Personal Computer), a mobile phone terminal (may be or may not be a so-called feature phone or a smartphone), a slate type tablet terminal, and the like are considered.

The client 400 generally includes a CPU 410, a storage device 420, an input device 430, a communication interface (I/F) unit 440, and the like.

The CPU 410 executes a program stored in the storage device 420 or the like, thereby controlling various kinds of processing in the client 400. The browser 411 which can browse the website provided by the member site providing server 100 or the web service providing server 200 primarily runs on the CPU 410.

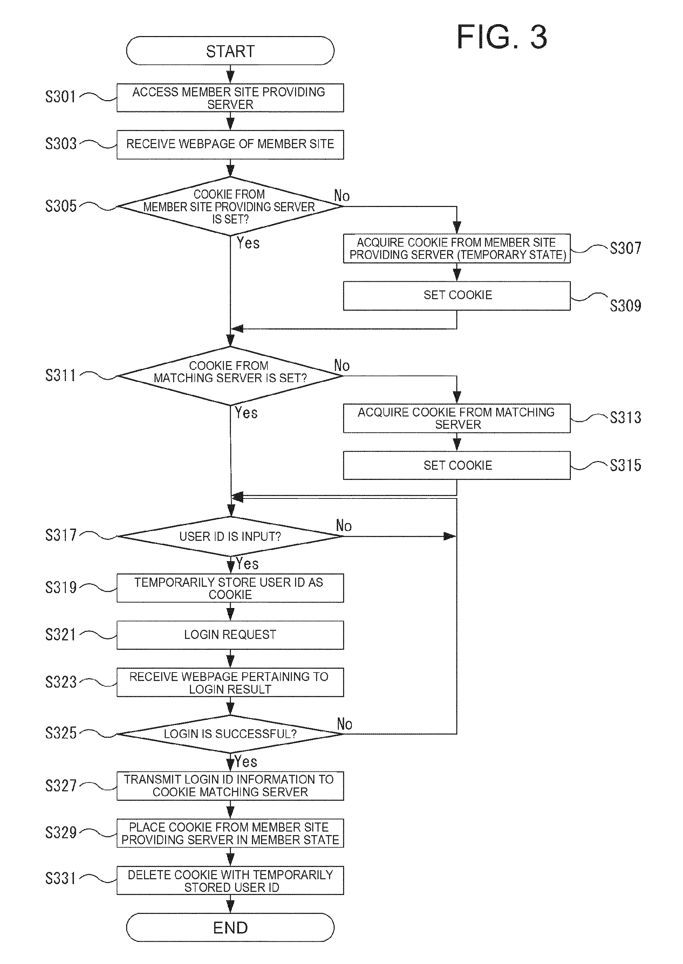

The storage device 420 is, for example, various storage mediums, such as an HDD (Hard Disk Drive) and a flash memory. The storage device 420 stores various program codes, such as the browser 411 which is executed by the CPU 410, and data required for executing a program. In particular, a cookie for member site 421 or a cookie for matching server 423 which is set in the browser 411 is stored in the storage device 420. In addition, when temporarily storing a user ID as a cookie, a cookie for user ID storage 425 is also stored in the storage device 420. The cookie for user ID storage 425 will be described below referring to Fig. 3 and the like.

As described above, the cookie for member site 421 is issued by the cookie processing unit 140 of the member site providing server 100. The acquisition of the cookie 421 is performed based on the tag for cookie processing 111 included in the page information 110 of the member site by the browser 411. The cookie 421 has two states of a member state in which the member information 121 can be acquired from the member site providing server 100 and a temporary state in which the member information 121 cannot be acquired from the member site providing server 100. As described above, at the time of the transmission of the cookie 421 from the member site providing server 100, the cookie 421 is in the temporary state. Meanwhile, if the client 400 succeeds in logging in to the member site provided by the member site providing server 100 once, the browser 411 places the cookie 421 in the member state under the control of the tag for cookie processing 111.

The cookie for matching server 423 is set by the cookie matching server 300. The cookie 423 includes an identifier for allowing the cookie matching server 300 to identify the client 400, and the cookie 423 transmits cookie information including the identifier to the cookie matching server 300 based on the cookie 423 at each timing including an information coordination request time. The cookie matching server 300 specifies the user ID of the user, who operates the client 400, based on the identifier and gives a notification of the user ID to the client 400.

The input device 430 is a device which is used when the user inputs various kinds of information. For example, a pointing device, such as a mouse or a touch pad, a keyboard, or the like corresponds to the input device 430. Various operations and the like pertaining to the browsing of the website using the browser 411 are input by the input device 430.

The communication I/F 440 is an interface which is used when the client 400 performs communication with various information processing systems, such as the member site providing server 100, the web service providing server 200, and the cookie matching server 300, through the Internet N.

### (3 Flow of Processing)

Hereinafter, the flow of processing of the data coordination system 1 of this embodiment will be described referring to Figs. 3 to 10. Respective processing steps described below can be executed after the sequence is arbitrarily changed or in parallel within a range in which no inconsistency occurs in the processing content. Another step may be provided between the respective processing steps. For convenience, a step described as a single step can be divided into a plurality of steps and executed. In addition, for convenience, steps described as a plurality of steps can be executed as a single step.

### (3.1 Flow of Processing Upon Accessing Member Site)

The flow of processing of each of the client 400, the member site providing server 100, and the cookie matching server 300 when the client 400 accesses the member site provided by the member site providing server 100 will be described.

### (3.1.1 Processing of Client 400)

First, the flow of processing of the client 400 upon accessing the member site provided by the member site providing server 100 will be described referring to Fig. 3. Fig. 3 is a flowchart illustrating the flow of processing of the client 400 upon accessing the member site.

When displaying the webpage of the member site provided by the member site providing server 100 on the browser 411 according to user operation, the browser 411 of the client 400 transmits a request to transmit (a request to browse) the page information 110 to the member site providing server 100 (S301). The member site providing server 100 transmits the page information 110 to the client 400 in response to the request. Therefore, the client 400 receives the page information 110 (S401).

The browser 411 determines whether or not the cookie 421 is set in the browser 411 according to the processing of the tag for cookie processing 111 included in the page information 110 (S305). If the cookie 421 is not set (No in S305), the browser 411 acquires the cookie 421 from the member site providing server 100 under the control by the tag for cookie processing 111 (S307), and sets the cookie 421 in the browser 411 (S309). At this time, since the client 400 has not yet logged in to the member site, the cookie 421 is in the temporary state.

The browser 411 determines whether or not the cookie for matching server 423 is set in the browser 411 under the control of the tag for cookie processing 111 (S311). If the cookie 423 is not set (No in S311), the browser 411 acquires the cookie 423 from the cookie matching server 300 under the control by the tag for cookie processing 111 (S313), and sets the cookie 423 in the browser 411 (S315).

The processing of S305 to S309 and the processing of S311 to S315 may be reversed.

Thereafter, the browser 411 determines whether or not a user ID is input on a login screen under the control by the tag for cookie processing 111 (S317). If the user ID is input, the browser 411 stores the user ID as the cookie for user ID storage 425 under the control by the tag for cookie processing 111 (S319). In this method, although the user ID is stored as the cookie for user ID storage 425, the invention is not limited thereto, and the user ID may be stored in an appropriate storage area.

Thereafter, if the password as well as the user ID is input from the user and the browser 411 transmits a login request to the member site providing server 100 based on user operation (S321), the browser 411 receives the page information 110 representing a login result to the member site providing server 100 (S323). As a result, if the login fails (No in S325), the browser 411 returns to S317 and starts the processing over.

When the page information 110 to which the login is successful is received (Yes in S325), the browser 411 reads information regarding the user ID, with which the login is successful, from the cookie for user ID storage 425 under the control by the tag for cookie processing 111 included in the page information 110 and transmits the read information to the cookie matching server 300 (S327). With this, the cookie matching server 300 can know the indication of the successful login and information regarding the user ID, with which the login is successful, and the identifier allocated to the cookie 423. Therefore, the coordination relationship between the user ID and the identifier can be managed as cookie coordination information 341. The browser 411 updates the cookie 421 to the member state under the control by the tag for cookie processing 111 (S329).

If the processing of S327 and S329 is completed, the cookie for user ID storage 425 is not required. Thereafter, the browser 411 deletes the cookie for user ID storage 425 under the control by the tag for cookie processing 111 (S331).

### (3.1.2 Processing of Member Site Providing Server 100)

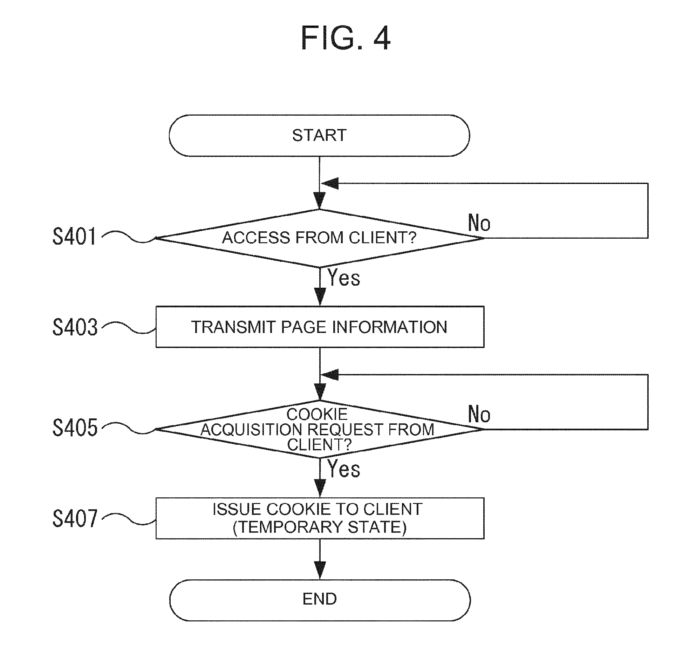

Next, the flow of processing on the member site providing server 100 side when the client 400 accesses the member site will be described referring to Fig. 4. Fig. 4 is a flowchart illustrating the flow of processing of the member site providing server 100 when the client 400 accesses the member site. The processing is processing on the member site providing server 100 side corresponding to the processing on the client 400 side described in "3.1.1" referring to Fig. 3.

If an access to the member site is received from the client 400 (Yes in S401), the website providing unit 130 transmits the page information 110 corresponding to an accessed URL to the client 400 (S403). Thereafter, if a cookie acquisition request from the client 400 based on the tag for cookie processing 111 embedded in the page information 110 is received (Yes in S405), the cookie processing unit 140 issues the cookie 421 to the client 400 (S407).

### (3.1.3 Processing of Cookie Matching Server 300)

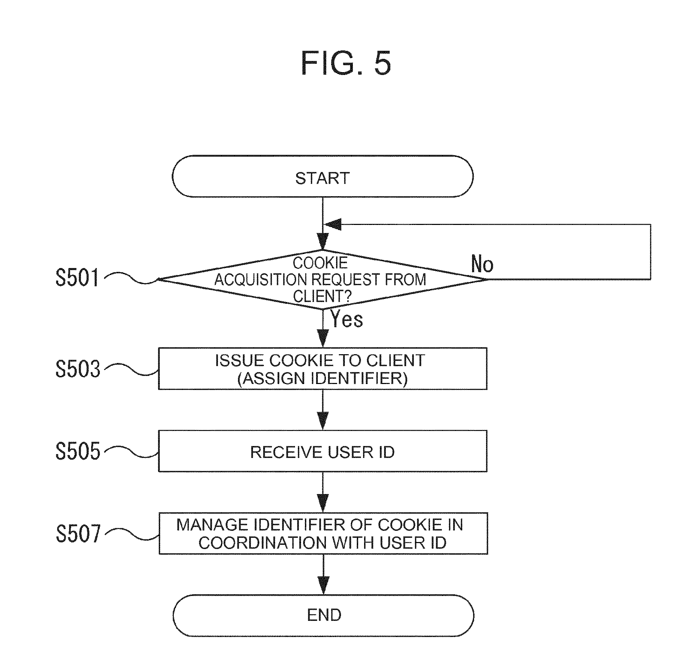

Subsequently, the flow of processing of the cookie matching server 300 when the client 400 accesses the member site will be described referring to Fig. 5. Fig. 5 is a flowchart illustrating the flow of processing of the cookie matching server 300 when the client 400 accesses the member site. The processing is processing on the cookie matching server 300 side corresponding to the processing on the client 400 side described in "3.1.1" referring to Fig. 3.

If a request to acquire the cookie 423 is received from the client 400 based on the function of the tag for cookie processing 111 (Yes in S501), the cookie issuance unit 310 transmits the cookie 423 to the client 400 (S503). The cookie 423 is assigned with an identifier for identifying each client 400.

Thereafter, if the notification of the user ID is received from the client 400 based on the function of the tag for cookie processing 111 (S505), the coordination information management unit 320 stores the identifier assigned to the notification received from the client 400 based on the cookie 423 in the DB 340 in coordination with the user ID as the cookie coordination information 341 (S507).

With this, the cookie matching server 300 can give a notification of the user ID based on the identifier of the cookie 423 set in the client 400.

### (3.2 Flow of Processing Upon Accessing Member Site by Different System)

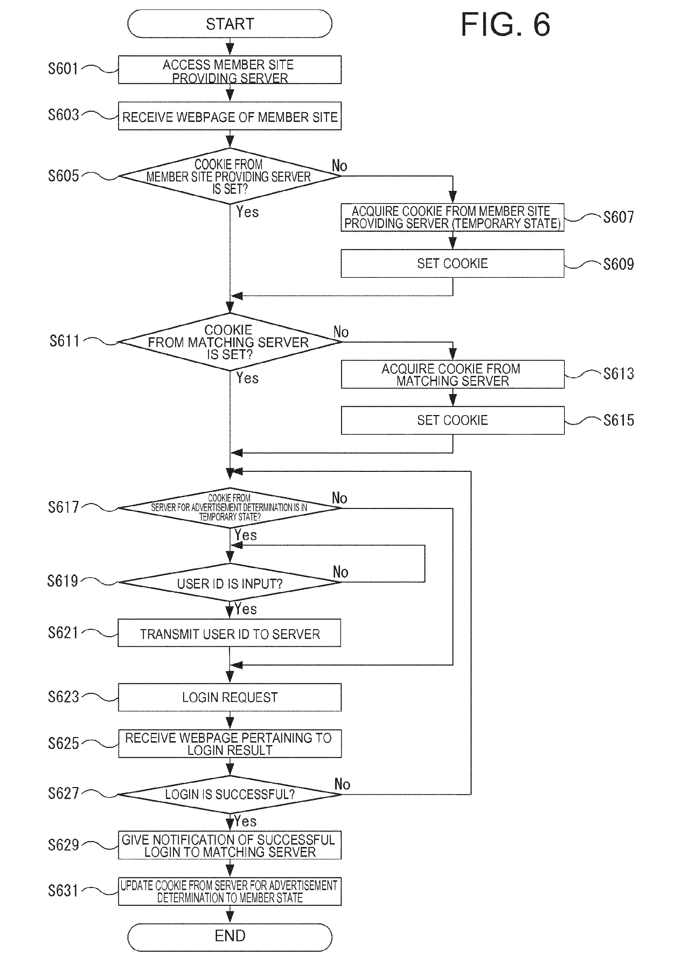

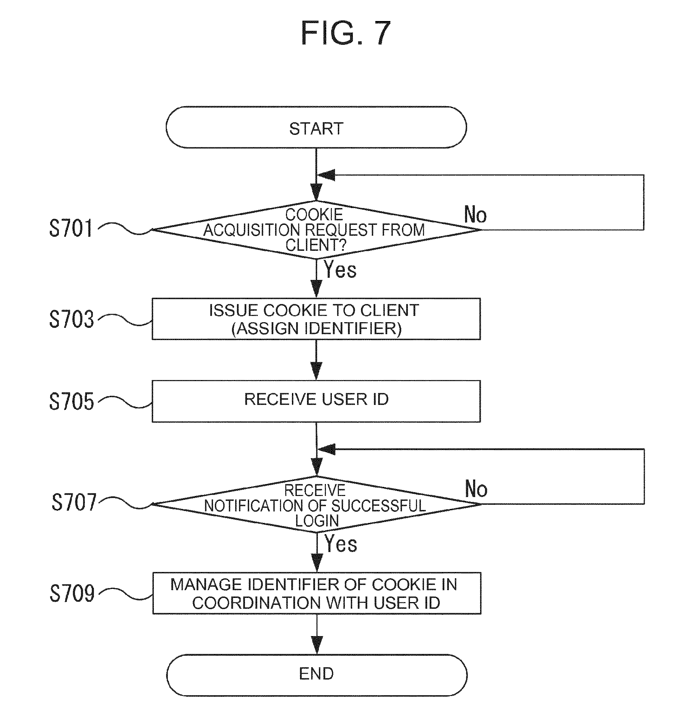

In the processing of "3.1" described above, although the notification of the user ID from the client 400 to the cookie matching server 300 and the notification indicating the successful login are performed at one time (S327 of Fig. 3 and S505 of Fig. 5), the invention is not limited thereto, and it is also considered that the notification of the user ID and the notification indicating the successful login are performed at different timings. Hereinafter, the flow of processing in this case will be described referring to Figs. 6 and 7. In this system, since the processing pertaining to the member site providing server 100 is the same as that in "3.1.2", description thereof will be omitted.

### (3.2.1 Processing of Client 400 Pertaining to Different System)

First, the flow of processing of the client 400 will be described referring to Fig. 6. Fig. 6 is a flowchart illustrating the flow of processing pertaining to a system different from "3.1" of the client 400 upon accessing the member site.

Since the processing of S601 to S615 is the same as the processing of S301 to S315 of Fig. 3, description thereof will be omitted.

The browser 411 determines whether or not the cookie 421 is in the temporary state under the control by the tag for cookie processing 111 on the login screen of the member site (S617). If the cookie 421 is in the temporary state (Yes in S617), when the user inputs the user ID to a user ID input box (Yes in S619), the user ID is transmitted to the cookie matching server 300 (S621). That is, while the user ID is stored in the cookie for user ID storage 425 in "3.1", in the example of "3.2", the user ID is transmitted to the cookie matching server 300 before the login without being stored in the cookie for user ID storage 425. With this, the cookie for user ID storage 425 on the client 400 side is not required.

Thereafter, if the password as well as the user ID is input from the user and the browser 411 transmits a login request to the member site providing server 100 based on user operation (S623), the browser 411 receives the page information 110 representing a login result from the member site providing server 100 (S625). As a result, if the login fails (No in S627), the browser 411 returns to S617 and starts the processing over.

When the page information 110 to which the login is successful is received (Yes in S627), the browser 411 gives a notification indicating the successful login to the cookie matching server 300 under the control by the tag for cookie processing 111 included in the page information 110 (S629). With this, the cookie matching server 300 can know the indication of the successful login (S629) and the user ID with which the login is successful (S621). Thereafter, the cookie 421 can be recognized as the member state in which data coordination is possible. The browser 411 updates the cookie 421 to the member state under the control by the tag for cookie processing 111 (S631).

### (3.2.2 Processing of Cookie Matching Server 300)

Next, the flow of processing on the cookie matching server 300 when the client 400 accesses the member site will be described referring to Fig. 7. Fig. 7 is a flowchart illustrating the flow of processing pertaining to a system different from "3.1" when the client 400 accesses the member site. The processing is processing on the cookie matching server 300 side corresponding to the processing on the client 400 side described in "3.2.1" referring to Fig. 6.

Since the processing of S701 to S705 is the same as the processing of S501 to S505 of Fig. 5, description thereof will be omitted.

In this embodiment, the user ID notified from the client 400 in S505 is not limited to the user ID with which the login to the member site is possible. Accordingly, the coordination information management unit 320 of the cookie matching server 300 waits for a notification of a successful login with the user ID from the client 400 (S707). If the notification indicating the successful login can be received from the client 400 (Yes in S707), the coordination information management unit 320 stores an identifier assigned to the notification received from the client 400 based on the cookie 423 in the DB 340 in coordination with the user ID received in S705 as the cookie coordination information 341 based on the function of the tag for cookie processing 111 (S707).

With this, the cookie matching server 300 can give a notification of the user ID based on the identifier of the cookie 423 set in the client 400.

### (3.3 Flow of Processing Upon Accessing Web Service Providing Site)

Subsequently, the flow of processing of the client 400, the cookie matching server 300, and the member site providing server 100 when the client 400 accesses the web service providing site provided by the web service providing server 200 will be described.

### (3.3.1 Processing of Client 400)

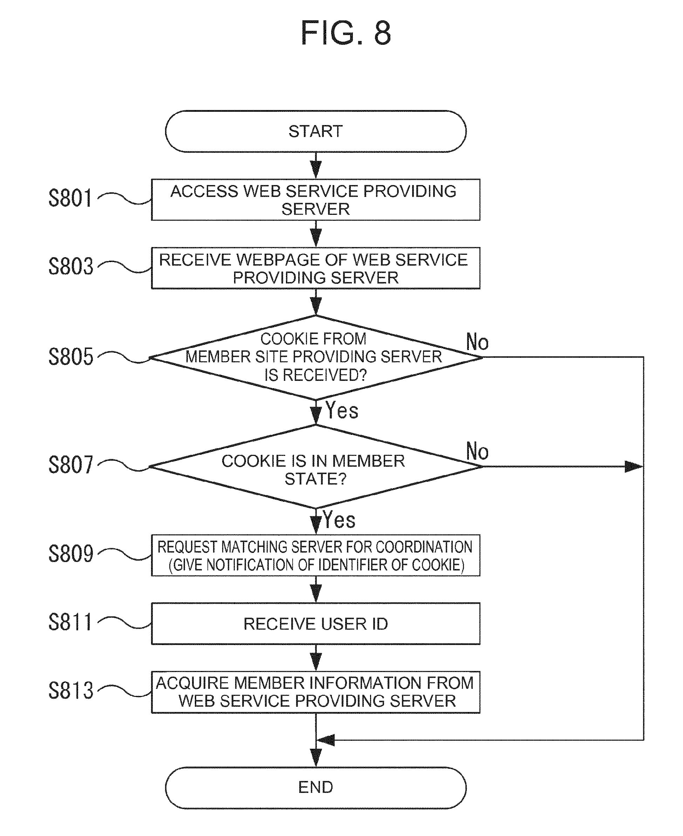

First, the flow of processing of the client 400 upon accessing the website provided by the web service providing server 200 will be described referring to Fig. 8. Fig. 8 is a flowchart illustrating the flow of processing of the client 400 upon accessing the website provided by the web service providing server 200.

When displaying the webpage provided by the web service providing server 200 on the browser 411, the browser 411 of the client 400 transmits a request to transmit (a request to browse) the page information 210 to the web service providing server 200 (S801). The web service providing server 200 transmits the page information 210 to the client 400 in response to the request. Therefore, the client 400 receives the page information 210 (S803).

The browser 411 confirms whether or not the cookie 421 from the member site providing server 100 and the cookie 423 from the cookie matching server 300 are set in the browser 411 under the control by the tag for information coordination 211 included in the page information 210 (S805 and S807). If any one of the cookies 421 and 423 is not set (No in S805 and No in S807), data coordination cannot be performed. Thereafter, the browser 411 ends the processing pertaining to data coordination.

If both cookies 421 and 423 are set in the browser 411 (Yes in S807), the browser 411 requests the cookie matching server 300 for data coordination under the control by the tag for information coordination 211 included in the page information 210 (S809). At this time, the browser 411 gives a notification of the identifier assigned to the cookie 423 to the cookie matching server 300 under the control by the cookie 423.

As a result, the cookie matching server 300 transmits the user ID corresponding to the identifier. Thereafter, the browser 411 receives the user ID under the control by the tag for cookie processing 111 (S811), and acquires the member information 121 corresponding to the user ID (S813). The member information 121 is reflected in the display screen based on the page information 210 received from the web service providing server 200.

### (3.3.2 Flow of Cookie Matching Server 300)

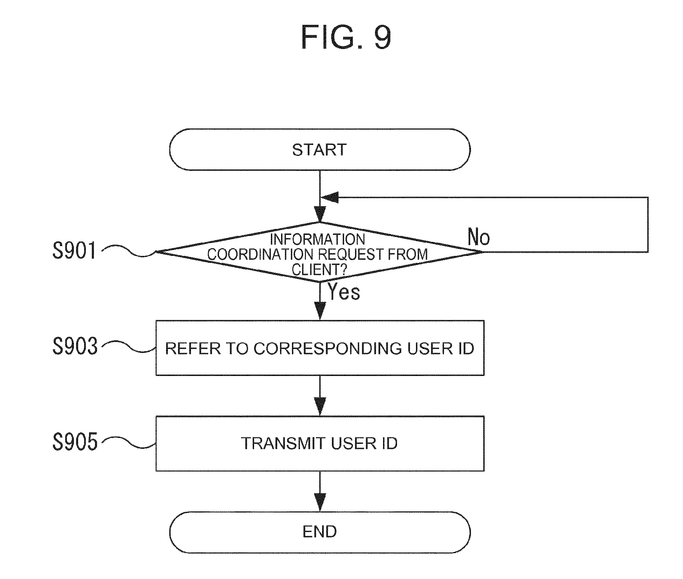

Next, the flow of processing of the cookie matching server 300 when the client 400 accesses the website provided by the web service providing server 200 will be described referring to Fig. 9. Fig. 9 is a flowchart illustrating the flow of processing of the cookie matching server 300 when the client 400 accesses the website provided by the web service providing server 200. That is, the processing is processing on the cookie matching server 300 side corresponding to the client 400 side described in "3.3.1" referring to Fig. 8.

If the client 400 accesses the website provided by the web service providing server 200, the browser 411 of the client 400 transmits an information coordination request to the cookie matching server 300 based on the tag for information coordination 211. If the cookie matching server 300 receives the information coordination request (S901), the ID notification unit 330 can acquire the user ID of the user who operates the client 400 by referring to the cookie coordination information 341 with the identifier assigned to the cookie 423 notified according to the cookie 423 together with the request as a key (S903). The ID notification unit 330 transmits the user ID to the client 400 (S905).

### (3.3.3 Processing of Member Site Providing Server 100)

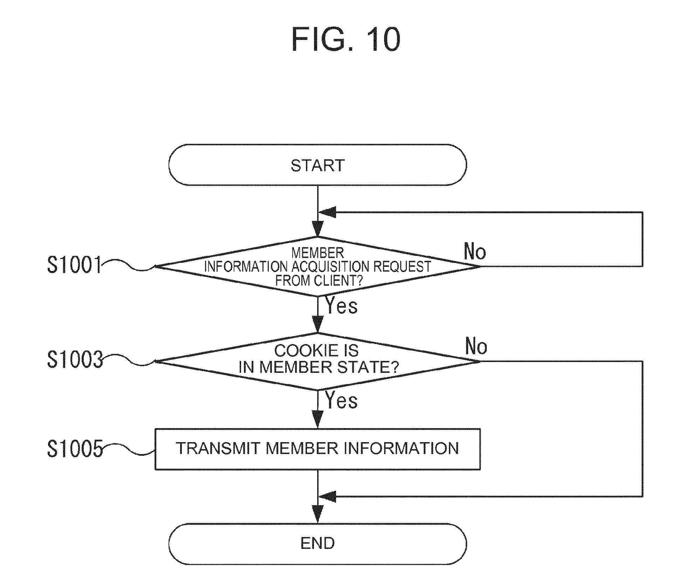

Subsequently, the flow of processing of the member site providing server 100 when the client 400 accesses the website provided by the web service providing server 200 will be described referring to Fig. 10. Fig. 10 is a flowchart illustrating the flow of processing of the member site providing server 100 when the client 400 accesses the website provided by the web service providing server 200. That is, the processing is processing on the member site providing server 100 side corresponding to the processing on the client 400 or the cookie matching server 300 described in "3.3.1" or "3.3.2" referring to Figs. 8 and 9.

If a request to acquire the member information 121 designated with the user ID is received from the client 400 (Yes in S1001), the member information output unit 150 determines whether or not the cookie 421 is in the member state by referring to the notification from the cookie 421 set in the browser 411 of the client 400 (S1003). As a result, if the cookie 421 is in the member state (S1003), it is possible to determine that the request to acquire the member information 121 designated with the user ID is valid. Therefore, the member information output unit 150 transmits the member information 121 corresponding to the user ID to the client 400 (S1005).

### (4 Hardware Configuration)

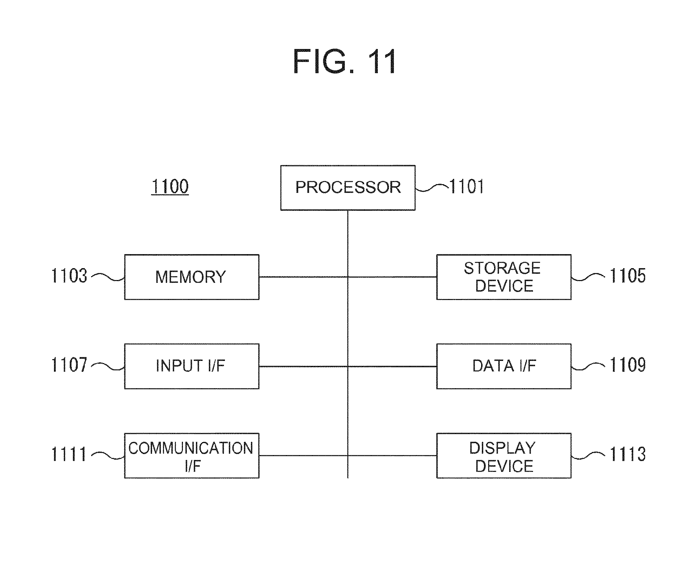

Hereinafter, an example of a hardware configuration when the member site providing server 100, the cookie matching server 300, or the web service providing server 200 described above is implemented with a computer 1100 will be described referring to Fig. 11. The functions of the member site providing server 100 or the cookie matching server 300 may be implemented by a plurality of devices through a network.

As illustrated in Fig. 11, a computer 1100 includes a processor 1101, a memory 1103, a storage device 1105, an input interface (I/F) 1107, a data I/F 1109, a communication I/F 1111, and a display device 1113.

The processor 1101 controls various kinds of processing in the computer 1100 by executing a program stored in the memory 1103. For example, the website providing unit 130, the cookie processing unit 140, and the member information output unit 150 in the member site providing server 100, the cookie issuance unit 310, the coordination information management unit 320, and the ID notification unit 330 in the cookie matching server 300, and the website providing unit 220 in the web service providing server 200 can be implemented as a program which is temporarily stored in the memory 1103 and primarily runs on the processor 1101.

The memory 1103 is, for example, a nonvolatile storage medium, such as a RAM (Random Access Memory). The memory 1103 temporarily stores program codes of programs to be executed by the processor 1101 or data necessary for executing the programs. For example, in the storage area of the memory 1103, a stack area necessary for executing the programs is secured.

The storage device 1105 is, for example, a nonvolatile storage medium, such as a hard disk or a flash memory. The storage device 1105 stores an operating system, or various programs for implementing the website providing unit 130, the cookie processing unit 140, and the member information output unit 150 in the member site providing server 100, the cookie issuance unit 310, the coordination information management unit 320, and the ID notification unit 330 in the cookie matching server 300, and the website providing unit 220 in the web service providing server 200. In addition, the storage device 1105 stores various kinds of data corresponding to the DB 120 in the member site providing server 100, the DB 340 in the cookie matching server 300, and the like. The programs or data stored in the storage device 1105 is loaded on the memory 1103 as necessary, and is referred to by the processor 1101.

The input I/F 1107 is a device which is used to receive an input from a user. Specific examples of the input I/F 1107 include a keyboard, a mouse, a touch panel, various sensors, and the like. The input I/F 1107 may be connected to the computer 1100 through, for example, an interface, such as a USB (Universal Serial Bus).

The data I/F 1109 is a device which is used to input data from the outside of the computer 1100. Specific examples of the data I/F 1109 include a drive device which reads data stored in various storage mediums, and the like. It is also considered to provide the data I/F 1109 outside the computer 1100. In this case, the data I/F 1109 is connected to the computer 1100 through, for example, an interface, such as a USB.

The communication I/F 1111 is a device which performs data communication with devices outside the computer 1100 in a wired or wireless manner, for example, through the Internet N. It is also considered to provide the communication I/F 1111 outside the computer 1100. In this case, the communication I/F 1111 is connected to the computer 1100 through, for example, an interface, such as a USB.

The display device 1113 is a device which displays various kinds of information. Specific examples of the display device 1113 include a liquid crystal display, an organic EL (Electro-Luminescence) display, and the like. The display device 1113 may be provided outside the computer 1100. In this case, the display device 1113 is connected to the computer 1100 through, for example, a display cable or the like.

### (5 Effects of This Embodiment)

As described above, in the data coordination system 1 of this embodiment, the coordination of the member information 121 can be achieved between the member site providing server 100 and the web service providing server 200 which are operated by different providers. At this time, since various kinds of information, such as the user ID or the password of the user, is not known to the operator of the web service providing server 200, security is sufficiently secured.

As a result, a load on data input to the user who receives the web service from the web service providing server 200 can be suppressed, and the operator of the member site providing server 100 or the web service providing server 200 can provide an additional value to the user, thereby increasing customer attraction.

In this embodiment, data coordination is performed based on the user ID. From this, at least the password is not known even to the manager of the cookie matching server 300. For this reason, high security is achieved.

### (6 Note)

It should be noted that the configuration of the embodiments described above may be combined or a part of the components may be replaced with one another. Also, the configuration of the invention is not limited to those of the embodiments described above, and various changes may be made without departing from the subject matter of the invention.

### Reference Signs List

1: data coordination system
100: member site providing server
110: page information
111: tag for cookie processing
120: database
121: member information
130: website providing unit
140: cookie processing unit
150: member information output unit
200: web service providing server
210: page information
211: tag for information coordination
220: website providing unit
300: cookie matching server
310: cookie issuance unit
320: coordination information management unit
330: ID notification unit
340: database
341: cookie coordination information
400: client terminal
410: CPU
411: browser
420: storage device
421: cookie for member site
423: cookie for matching server
425: cookie for user ID storage
430: input device
440: communication interface unit
1100: computer
1101: processor
1103: memory
1105: storage device
1107: input interface
1109: data interface
1111: communication interface
1113: display device
N: Internet

## Claims

1. An information processing system comprising:
cookie transmission means for transmitting a cookie in response to a request from a client terminal based on a program included in webpage information of a member site when the client terminal accesses the member site;
reception means for receiving a user ID for logging in to the member site from the client terminal;
information management means for managing the user ID in coordination with an identifier assigned to the cookie; and
transmission means for transmitting the user ID corresponding to the identifier assigned to the cookie set in the client terminal in response to a request from the client terminal based on a program included in webpage information of a site different from the member site.

2. The information processing system according to claim 1,
wherein the reception means receives a notification indicating a successful login to the member site from the client terminal separately from the user ID, and
the information management means manages the user ID in coordination with the identifier assigned to the cookie after the notification is received.

3. An information processing system comprising:
first transmission means for transmitting webpage information including, as a part, a program for providing a member site to a client terminal and causing the client terminal to acquire a cookie from another information processing apparatus and to transmit a user ID to another information processing apparatus; and
second transmission means for transmitting member information pertaining to a member of the member site in response to a request designated with a user ID based on a program included in webpage information of a site different from the member site.

4. The information processing system according to claim 3, further comprising:
cookie transmission means for transmitting a cookie in response to a request from the client terminal based on a program included in the webpage information.

5. An information processing system which provides a website, the information processing system comprising:
transmission means for transmitting, to a client terminal, webpage information including a program, which causes the client terminal
to receive, from a first information processing apparatus, a user ID corresponding to an identifier of a cookie received from the first information processing apparatus, and
to acquire member information pertaining to a member site from a second information processing apparatus based on the user ID.

6. An information processing method which causes an information processing system to perform:
a step of transmitting a cookie in response to a request from a client terminal based on a program included in webpage information of a member site when the client terminal accesses the member site;
a step of receiving a user ID for logging in to the member site from the client terminal;
a step of managing the user ID in coordination with an identifier assigned to the cookie; and
a step of transmitting the user ID corresponding to the identifier assigned to the cookie set in the client terminal in response to a request from the client terminal based on a program included in webpage information of a site different from the member site.

7. An information processing method which causes an information processing system to perform:
a step of transmitting webpage information including, as a part, a program for providing a member site to a client terminal and causing the client terminal to acquire a cookie from another information processing apparatus and to transmit a user ID to another information processing apparatus; and
a step of transmitting member information pertaining to a member of the member site in response to a request designated with a user ID based on a program included in webpage information of a site different from the member site.

8. An information processing method for an information processing system which provides a website, the information processing method comprising:
a step of transmitting, to a client terminal, webpage information including a program which causes the client terminal
to receive, from a first information processing apparatus, a user ID corresponding to an identifier of a cookie received from the first information processing apparatus, and
to acquire member information pertaining to a member site from a second information processing apparatus based on the user ID.
